# FASCICULE DE BREVET EUROPEEN

(11) **EP 2 558 734 B1**
(45) Date de publication et mention de la délivrance du brevet: **10.02.2016**
(21) Numéro de dépôt: 11714363.6
(22) Date de dépôt: 16.03.2011
(51) Int. Cl.: F16B 5/06, F16B 21/12

(54) **ASSEMBLAGE MECANIQUE D'UTILISATION SIMPLIFIEE**
MECHANISCHE ANORDNUNG MIT VEREINFACHTER VERWENDUNG
MECHANICAL ASSEMBLY HAVING SIMPLIFIED USE

(30) Priorité: 13.04.2010 FR 1052794
(43) Date de publication de la demande: 20.02.2013
(73) Titulaire: Legrand France, 87000 Limoges (FR); Legrand SNC, 87000 Limoges (FR)
(72) Inventeur: BENARD, Julien, F-76890 Beauval en Caux (FR); HAUCHARD, Patrick, F-76150 Maromme (FR)
(74) Mandataire: Novagraaf Technologies
(86) Numéro de dépôt international: PCT/FR2011/050533
(87) Numéro de publication internationale: WO 2011/128540

(56) Documents cités:
- DE-U1-202004 018 340
- GB-A- 2 333 321

## Description

L'invention concerne, de façon générale, les techniques d'assemblage mécanique, notamment pour le montage de mobiliers métalliques modulaires.

Plus précisément, l'invention concerne un assemblage mécanique comprenant au moins un organe de liaison comportant des premier et deuxième crochets présentant chacun une extrémité liée et une extrémité libre espacées l'une de l'autre suivant une direction parallèle à un premier axe, ces premier et deuxième crochets étant disposés en vis-à-vis l'un de l'autre suivant un deuxième axe d'alignement perpendiculaire au premier axe, étant élastiquement sollicités l'un vers l'autre, et étant mobiles entre une position relative de rapprochement extrême et une position relative d'écartement extrême.

Des organes de liaison de ce type sont par exemple décrits dans le certificat d'utilité FR 2 540 946 en référence à sa figure 1, et dans le brevet EP 0 465 883 en référence à sa figure 3.

Alors que les organes de liaison décrits dans ces documents antérieurs ont vocation à être utilisés sans outil, leur conception ne leur confère qu'une ergonomie réduite, en particulier lorsque ces organes de liaison doivent être manipulés en même temps que d'autres éléments de construction.

Dans ce contexte, la présente invention a au moins pour but de proposer un assemblage mécanique comprenant un organe de liaison qui soit facilement utilisable sans outil tout en présentant une structure simple, ou consistant en un tel organe.

A cette fin, l'assemblage de l'invention, par ailleurs conforme à la définition générique qu'en donne le préambule ci-dessus, est essentiellement caractérisé en ce que l'organe de liaison comprend des première et deuxième pièces et des moyens élastiques de sollicitation de ces pièces, en ce que les première et deuxième pièces portent respectivement les premier et deuxième crochets et des première et deuxième oreilles de préhension, en ce que ces première et deuxième pièces sont montées coulissantes l'une par rapport à l'autre, et en ce que les première et deuxième pièces présentent une zone de croisement mutuel disposée entre leurs oreilles et leurs crochets respectifs, ce dont il résulte que les premier et deuxième crochets peuvent être écartés l'un de l'autre par rapprochement des première et deuxième oreilles de préhension.

Dans un mode de réalisation possible de l'invention, les moyens élastiques de sollicitation comprennent un ressort hélicoïdal travaillant en compression et propre à écarter les première et deuxième oreilles de préhension l'une de l'autre.

Dans ce cas, les première et deuxième pièces peuvent présenter, du côté opposé aux crochets par rapport à la zone de croisement, des premier et deuxième logements respectifs disposés en vis-à-vis, débouchant l'un vers l'autre, et dans lesquels sont respectivement insérées à force des première et deuxième extrémités du ressort, ce ressort assurant ainsi la cohésion de l'organe de liaison.

Par ailleurs, chaque crochet présente par exemple, dans un plan perpendiculaire au deuxième axe, une transition entre une zone de plus petite largeur et une zone de plus grande largeur de ce crochet, respectivement plus et moins éloignées de l'extrémité libre de ce crochet suivant le premier axe.

Chaque crochet peut aussi présenter, dans un plan contenant les premier et deuxième axes, un bord incliné prenant naissance à distance de l'extrémité libre de ce crochet et se rapprochant de l'autre crochet à distance croissante de l'extrémité liée de ce crochet.

Dans le mode de réalisation le plus complet de l'invention, il est prévu que l'assemblage mécanique comprenne en outre des premier et deuxième éléments mutuellement superposés dans une zone de superposition, que ces deux éléments soient, au moins dans la zone de superposition, conformés en plaques et percés de paires respectives d'orifices correspondants, que les orifices correspondants appartenant aux premier et deuxième éléments se recouvrent au moins partiellement, et que les premier et deuxième crochets de l'organe de liaison soient engagés dans les paires respectives d'orifices correspondants des premier et deuxième éléments superposés, le deuxième élément étant disposé entre le premier élément et l'extrémité libre de chaque crochet.

Dans ce cas, il est judicieux de prévoir que cet assemblage mécanique comprenne en outre un organe d'indexation inséré dans des lumières respectives superposées des premier et deuxième éléments, et coopérant avec ces lumières pour assurer un maintien de la position relative des éléments superposés suivant le deuxième axe au moins.

L'organe d'indexation, qui peut être indépendant de l'organe de liaison, prend par exemple la forme d'une plaquette qui, au moins en présence de l'organe de liaison dans les deux éléments superposés, est bloquée à l'intérieur desdites lumières.

Dans le cas où chaque crochet présente une transition entre des zones de largeurs différentes, chaque orifice de chaque paire d'orifices du premier élément présente avantageusement au moins une zone de plus petite largeur et une zone de plus grande largeur respectivement plus et moins éloignées de l'autre orifice de cette paire, les zones de plus petite et de plus grande largeurs de chaque orifice étant dimensionnées pour être respectivement traversées par les zones de plus petite et de plus grande largeurs de l'un des crochets, et la zone de plus petite largeur de chaque orifice étant moins large que la zone de plus grande largeur de chaque crochet, ce dont il résulte que l'organe de liaison reste lié au premier élément en position d'écartement extrême des crochets.

Dans ce cas, chaque orifice de chaque paire d'orifices du premier élément peut en outre présenter au moins une deuxième zone de plus petite largeur, la zone de plus grande largeur et la deuxième zone de plus petite largeur de chaque orifice étant respectivement plus et moins éloignées de l'autre orifice de cette paire, ce dont il résulte que les crochets de la pièce de liaison ne peuvent être insérés dans les orifices d'une paire d'orifices du premier élément que dans une position relative intermédiaire entre leur position de rapprochement extrême et leur position d'écartement extrême.

Chaque orifice de chaque paire d'orifices du deuxième élément peut quant à elle être rectangulaire et présenter, suivant un troisième axe perpendiculaire aux premier et deuxième axes, une largeur supérieure à celle de la zone de plus grande largeur d'un crochet.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue éclatée en perspective d'un organe de liaison constituant le composant ou l'un des composants d'un assemblage mécanique conforme à l'invention ;
- la figure 2 est une vue en élévation à échelle agrandie de l'une des pièces de l'organe de liaison illustré à la figure 1 ;
- la figure 3 est une vue en perspective à échelle agrandie de l'organe de liaison illustré à la figure 1, représenté en cours d'assemblage ;
- la figure 4 est une vue en perspective à échelle agrandie de l'organe de liaison illustré à la figure 1, représenté après assemblage ;
- la figure 5 est une vue en perspective d'un premier élément et d'un organe d'indexation utilisables dans un assemblage mécanique conforme à l'invention ;
- la figure 6 est une vue en perspective ne se distinguant de la figure 5 que par le fait que le premier élément et l'organe d'indexation y sont représentés après assemblage réciproque ;
- la figure 7 est une vue en perspective éclatée illustrant d'une part l'organe de liaison et d'autre part le premier élément et l'organe d'indexation, les crochets de l'organe de liaison étant représentés dans une position relative intermédiaire entre leur position de rapprochement extrême et leur position d'écartement extrême ;
- la figure 8 est une vue en perspective ne se distinguant de la figure 7 que par le fait que l'organe de liaison, le premier élément et l'organe d'indexation y sont représentés après assemblage réciproque ;
- la figure 9 est une vue en perspective représentant, en plus l'organe de liaison, du premier élément et de l'organe d'indexation, un deuxième élément utilisable dans un assemblage mécanique conforme à l'invention, les crochets de l'organe de liaison étant représentés dans leur position d'écartement extrême ;
- la figure 10 est une vue en coupe de l'assemblage illustré à la figure 9, la coupe étant réalisée dans un plan contenant les axes Z et X illustrés à la figure 1 ;
- la figure 11 est une vue en perspective ne se distinguant de la figure 9 que par le fait que les crochets de l'organe de liaison y sont représentés dans leur position de rapprochement extrême ;
- la figure 12 est une vue en coupe de l'assemblage illustré à la figure 11, la coupe étant réalisée dans un plan contenant les axes Z et X illustrés à la figure 1 ;
- la figure 13A est une vue en perspective partielle d'un assemblage comprenant l'organe de liaison et le premier élément, cette figure illustrant la position qu'occupe le deuxième crochet de l'organe de liaison dans l'orifice correspondant du premier élément lorsque les crochets de l'organe de liaison sont dans leur position relative intermédiaire ;
- la figure 13B ne se distingue de la figure 13A que par le fait qu'elle illustre la position qu'occupe le deuxième crochet de l'organe de liaison dans l'orifice correspondant du premier élément lorsque les crochets de l'organe de liaison sont dans leur position d'écartement extrême ; et
- la figure 13C ne se distingue de la figure 13A que par le fait qu'elle illustre la position qu'occupe le deuxième crochet de l'organe de liaison dans l'orifice correspondant du premier élément lorsque les crochets de l'organe de liaison sont dans leur position de rapprochement extrême.

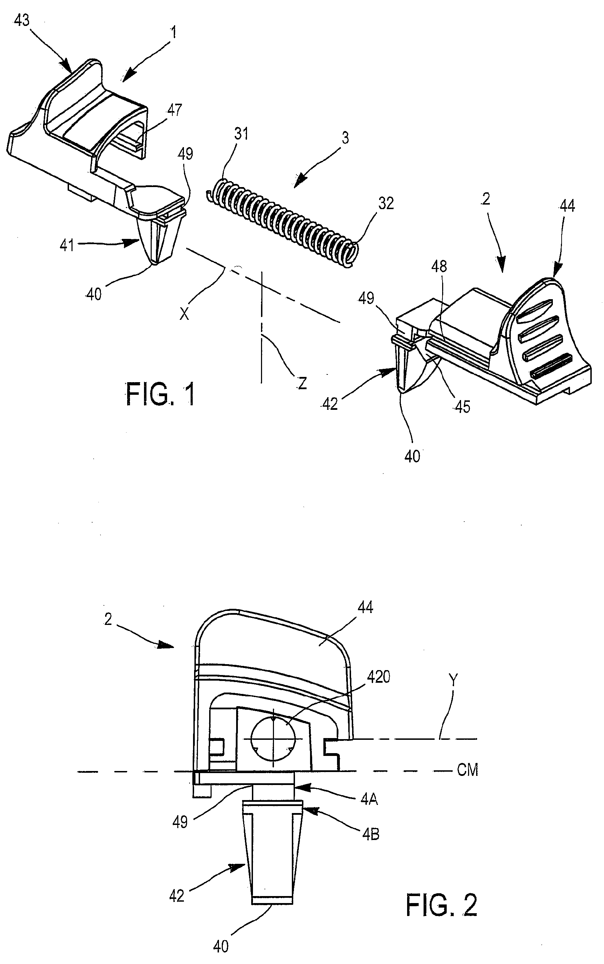

Comme annoncé précédemment, l'invention concerne un assemblage mécanique comprenant au moins un organe de liaison tel qu'illustré à la figure 1.

Cet organe de liaison comprend essentiellement une première pièce 1, une deuxième pièce 2, et un ressort hélicoïdal 3 propre à solliciter élastiquement les pièces 1 et 2.

Les pièces 1 et 2 comportent des crochets respectifs 41 et 42 dont chacun présente une extrémité liée 49 et une extrémité libre 40, les extrémités liée et libre de chaque crochet étant espacées l'une de l'autre suivant une direction parallèle à un axe Z (figure 1).

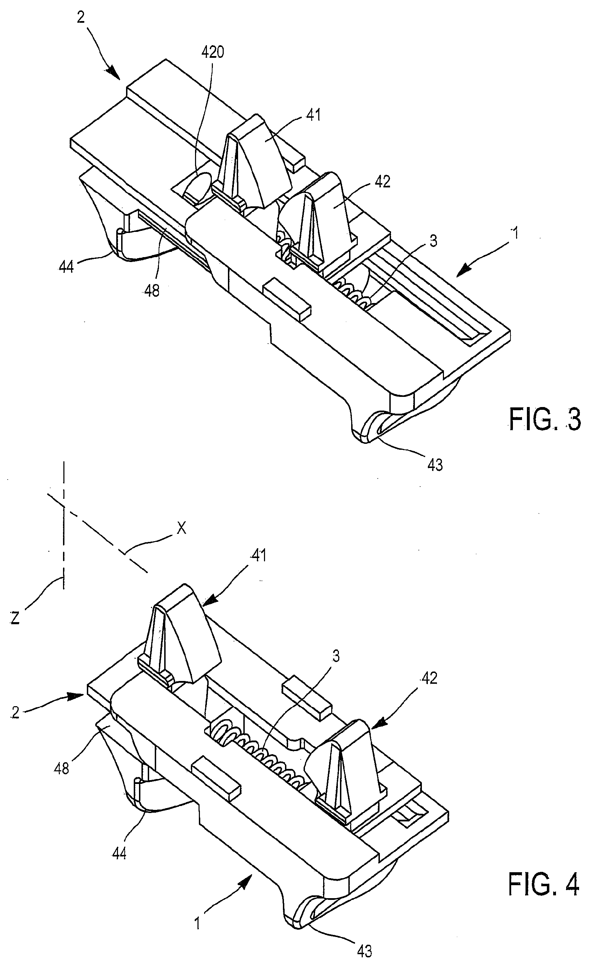

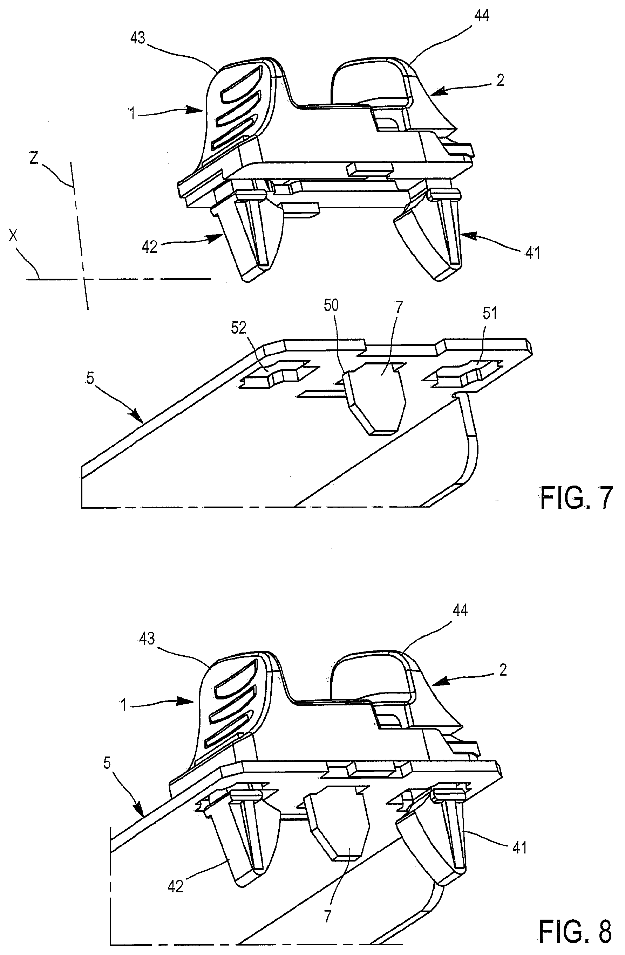

Dans la configuration assemblée de l'organe de liaison, visible notamment aux figures 4 et 7, les crochets 41 et 42 sont disposés en vis-à-vis l'un de l'autre suivant un axe d'alignement X perpendiculaire à l'axe Z, et sont élastiquement sollicités l'un vers l'autre par le ressort 3.

Les pièces 1 et 2 sont montées coulissantes l'une par rapport à l'autre suivant l'axe X d'alignement des crochets 41 et 42, et comportent pour ce faire des moyens de guidage mutuel, tels que des nervures 47, et des rainures 48 dimensionnées pour recevoir les nervures à coulissement suivant l'axe X.

Les pièces 1 et 2 peuvent être identiques et comporter d'un côté une nervure et de l'autre une rainure, la nervure de chaque pièce étant ainsi montée coulissante dans la rainure de l'autre.

En variante, comme illustré sur les figures, l'une des deux pièces, en l'occurrence la pièce 1, peut porter les nervures 47 tandis que l'autre pièce, en l'occurrence la pièce 2, porte les rainures 48, les pièces 1 et 2 étant alors différentes l'une de l'autre.

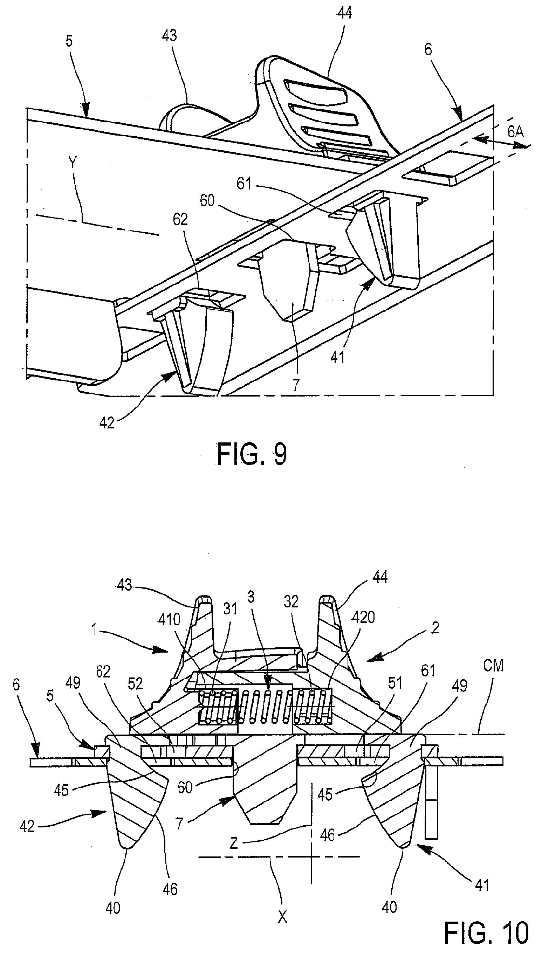

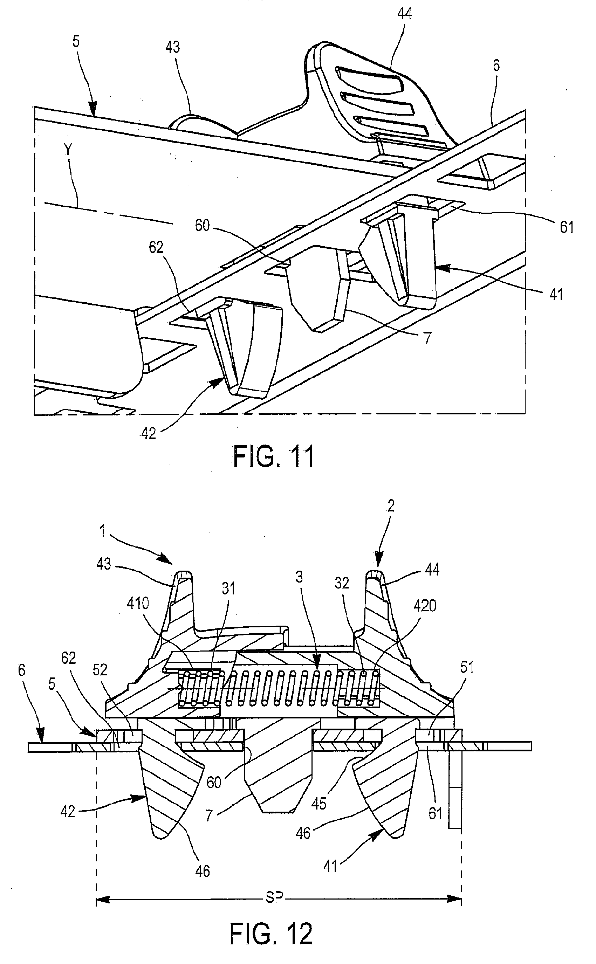

Quel que soit l'agencement particulier choisi, les crochets sont mobiles entre une position relative de rapprochement extrême visible notamment sur la figure 12, et une position relative d'écartement extrême visible notamment sur la figure 10.

Outre les crochets 41 et 42, les pièces 1 et 2 portent des oreilles de préhension respectives 43 et 44.

Par ailleurs, les pièces 1 et 2 présentent une zone de croisement mutuel CM visible sur les figures 2 et 10 et disposée, suivant l'axe Z, entre les oreilles 43 et 44 d'une part et les crochets 41 et 42 de ces pièces.

Grâce à cet agencement, les crochets 41 et 42 peuvent être écartés l'un de l'autre par un rapprochement des oreilles de préhension 43 et 44 sans que les pièces 1 et 2 ne soient articulées l'une sur l'autre.

Le ressort hélicoïdal 3, qui travaille en compression, est utilisé à la fois pour écarter l'une de l'autre les oreilles de préhension 43 et 44 et pour assurer la cohésion de l'organe de liaison.

Pour ce faire, les pièces 1 et 2 présentent, du côté opposé aux crochets 41 et 42 par rapport à leur zone de croisement CM, des logements respectifs 410 et 420 qui sont disposés en vis-à-vis, qui débouchent l'un vers l'autre, et qui sont dimensionnés pour pouvoir respectivement accueillir et maintenir les extrémités 31 et 32 du ressort 3, qui y sont insérées à force.

Comme le montre la figure 2, chacun des crochets 41 et 42 présente, dans un plan perpendiculaire à l'axe X et qui est celui de la figure 2, une transition entre une zone de plus petite largeur 4A et une zone de plus grande largeur 4B.

Comme le montre encore la figure 2, la zone de plus petite largeur 4A de chaque crochet est plus éloignée, suivant l'axe Z, de l'extrémité libre 40 de ce crochet que ne l'est la zone de plus grande largeur 4B.

Par ailleurs, comme le montre notamment la figure 10, chacun des crochets 41 et 42 présente, dans un plan contenant les axes Z et X et qui est celui de la figure 10, un bord incliné 45.

Pour le crochet 41, ce bord incliné 45 prend naissance à distance de l'extrémité libre 40 de ce crochet et se rapproche du crochet 42 à distance croissante de l'extrémité liée 49 de ce crochet 41.

De même, pour le crochet 42, ce bord incliné 45 prend naissance à distance de l'extrémité libre 40 de ce crochet et se rapproche du crochet 41 à distance croissante de l'extrémité liée 49 de ce crochet 42.

L'organe de liaison 1-3 est conçu pour développer tous ses avantages lorsque l'assemblage mécanique auquel il participe comprend en outre au moins deux autres éléments, qui sont référencés 5 et 6, et qui sont mutuellement superposés dans une zone de superposition SP.

Ces éléments 5 et 6 sont, au moins dans leur zone de superposition SP, conformés en plaques et percés de paires respectives d'orifices correspondants.

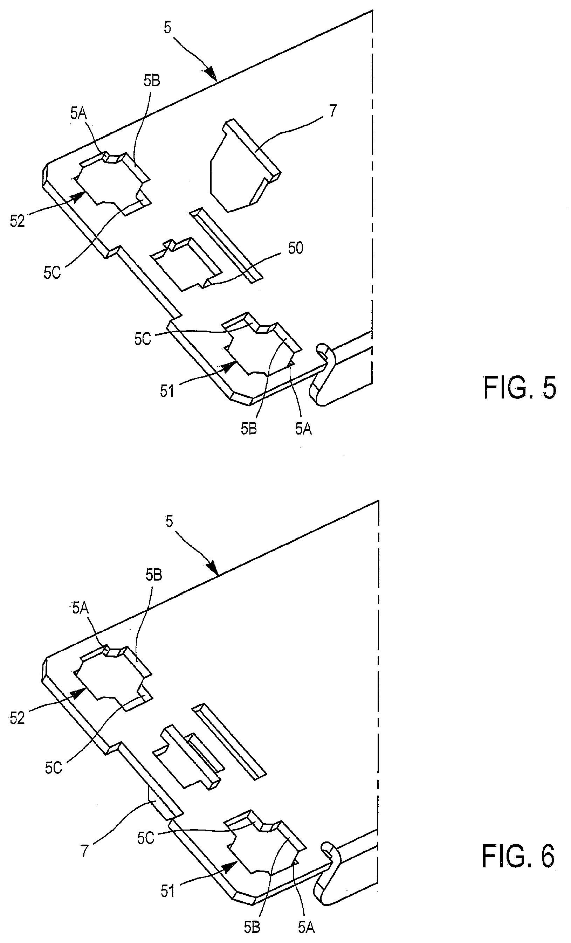

Les figures 5 et 6 montrent par exemple une paire d'orifices 51 et 52 de l'élément 5, tandis que les figures 9 et 11 montrent une paire d'orifices 61 et 62 de l'élément 6.

Comme le montrent par ailleurs les figures 10 et 12, les orifices 51 et 61 se correspondent en ce sens qu'ils se recouvrent au moins partiellement, comme c'est également le cas des orifices 52 et 62.

Les crochets 41 et 42 de l'organe de liaison 1-3 sont engagés dans les paires respectives d'orifices correspondants des éléments superposés 5 et 6.

En d'autres termes (figure 10 et 12), le crochet 41 est engagé dans les orifices correspondants 51 et 61, tandis que le crochet 42 est engagé dans les orifices correspondants 52 et 62.

Par convention, on définira comme deuxième élément 6 l'élément qui est disposé entre l'autre élément 5 et l'extrémité libre 40 de chacun des crochets 41 et 42.

Les éléments 5 et 6 peuvent aussi comprendre des lumières correspondantes, qui sont respectivement référencées 50 (figure 5) et 60 (figure 9) et qui se superposent au moins partiellement lorsque ces éléments 5 et 6 sont dans une position relative autorisant l'insertion du crochet 41 dans les orifices 51 et 61, et du crochet 42 dans les orifices 52 et 62.

Dans ce cas, l'assemblage mécanique de l'invention comprend aussi de préférence un organe d'indexation 7 inséré dans les lumières respectives superposées 50 et 60 des éléments 5 et 6.

Cet organe d'indexation, qui prend par exemple la forme d'une plaquette et qui peut être indépendant de l'organe de liaison 1-3, coopère avec les lumières 50 et 60 dans lesquelles il est inséré pour assurer un maintien de la position relative des éléments superposés 5 et 6 au moins suivant l'axe X d'alignement de crochets 41 et 42.

Cet agencement permet d'éviter qu'un glissement intempestif des éléments 5 et 6 suivant l'axe X puisse provoquer un démontage accidentel de l'organe de liaison 1-3.

Même lorsque l'organe d'indexation 7 est indépendant de l'organe de liaison 1-3, il est judicieux de prévoir que cet organe d'indexation 7 soit bloqué à l'intérieur des lumières 50 et 60 par l'organe de liaison 1-3 lorsque cet organe de liaison est présent dans les éléments superposés 5 et 6, c'est-à-dire lorsque les crochets 41 et 42 sont engagés dans les orifices 51 et 61 d'une part, et 52, 62 d'autre part.

Comme le montrent le mieux les figures 5 et 6, chacun des orifices 51 et 52 de chaque paire d'orifices de l'élément 5 présente au moins une zone 5A de plus petite largeur et une zone 5B de plus grande largeur.

La zone 5A de l'orifice 51 est plus éloignée de l'autre orifice 52 que ne l'est la zone 5B de ce même orifice 51.

De même, la zone 5A de l'orifice 52 est plus éloignée de l'orifice 51 que ne l'est la zone 5B de ce même orifice 52.

La zone 5A de plus petite largeur de chaque orifice est dimensionnée pour être traversée par la zone 4A de plus petite largeur du crochet 41 ou 42 correspondant.

De même, la zone 5B de plus grande largeur de chaque orifice est dimensionnée pour être traversée par la zone 4B de plus grande largeur du crochet 41 ou 42 correspondant.

En revanche, la zone 5A de plus petite largeur de chaque orifice est moins large que la zone 4B de plus grande largeur de chacun des crochets 41 et 42.

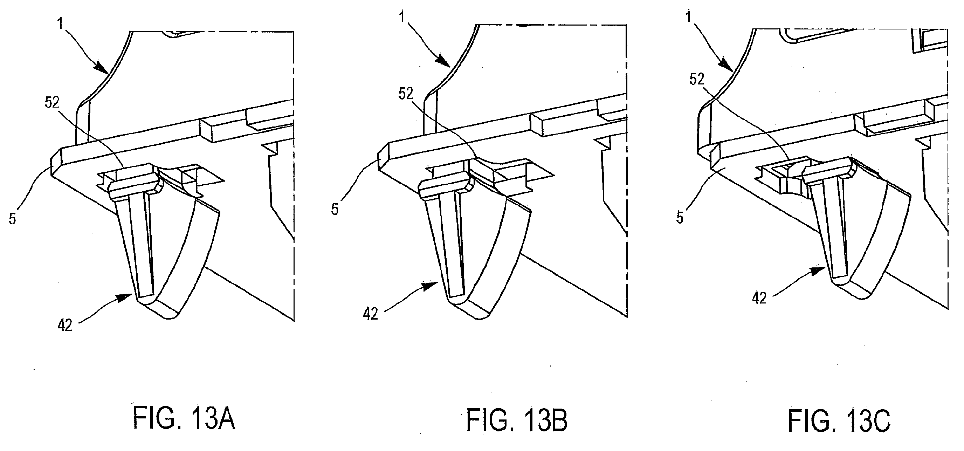

Grâce à cet agencement, et comme le montrent les figures 10 et 13B, l'organe de liaison 1-3 reste lié à l'élément 5 lorsque les crochets 41 et 42 sont dans leur position d'écartement extrême.

Comme le montrent encore les figures 5 et 6, chacun des orifices 51 et 52 de chaque paire d'orifices de l'élément 5 présente de préférence aussi une deuxième zone 5C de plus petite largeur.

La zone 5B de plus grande largeur de l'orifice 51 est plus éloignée de l'orifice 52 que ne l'est la deuxième zone 5C de plus petite largeur de ce même orifice 51.

De même, la zone 5B de plus grande largeur de l'orifice 52 est plus éloignée de l'orifice 51 que ne l'est la deuxième zone 5C de plus petite largeur de ce même orifice 52.

Grâce à cet agencement, les crochets 41 et 42 de la pièce de liaison 1-3 ne peuvent être insérés dans les orifices correspondants 51 et 52 de l'élément 5 que dans leur position relative illustrée aux figures 8 et 13B, et qui est intermédiaire entre les positions relatives de rapprochement extrême et d'écartement extrême de ces crochets.

En revanche, comme le montre par exemple la figure 9, chacun des orifices de chaque paire d'orifices 61 et 62 du deuxième élément 6 est par exemple rectangulaire et présente, suivant un axe Y perpendiculaire à chacun des deux axes Z et X, une largeur 6A supérieure à celle de la zone 4B de plus grande largeur du crochet 41 ou 42 correspondant.

Par ailleurs, bien que les crochets 41 et 42 aient été représentés, par exemple sur les figures 10 et 12, comme ayant, à partir de leur bord incliné 45 et dans le plan des axes X et Z, une forme effilée en direction de leur extrémité libre 40, il peut être judicieux de donner une autre forme à ces crochets.

En particulier, chacun des bords en vis-à-vis 46 que présentent les crochets 41 et 42 dans le plan des axes X et Z au-delà de leurs bords inclinés 45 peut être au moins localement parallèle à l'axe X pour adopter une forme rentrante susceptible de constituer une butée sur l'élément 6 en cas de tentative d'introduction à force des crochets 41 et 42 dans les orifices 61 et 62.

Cette forme de crochets permet ainsi d'éviter qu'un utilisateur tente d'assembler, comme il est possible de le faire avec les crochets illustrés aux figures 10 et 12, un élément 5, muni d'un organe de liaison 1 à 3, avec un élément 6 par simple poussée des crochets 41 et 42 dans les orifices 61 et 62 et donc sans maintien de l'organe de liaison par ses oreilles 43 et 44, une telle opération forçant évidemment les crochets à passer par leur position intermédiaire et conduisant donc à l'éjection de l'organe de liaison en raison de l'absence de maintien de cet organe.

## Revendications

1. Assemblage mécanique comprenant au moins un organe de liaison (1-3) comportant des premier et deuxième crochets (41, 42) présentant chacun une extrémité liée (49) et une extrémité libre (40) espacées l'une de l'autre suivant une direction parallèle à un premier axe (Z), ces premier et deuxième crochets (41, 42) étant disposés en vis-à-vis l'un de l'autre suivant un deuxième axe d'alignement (X) perpendiculaire au premier axe (Z), étant élastiquement sollicités l'un vers l'autre, et étant mobiles entre une position relative de rapprochement extrême et une position relative d'écartement extrême, **caractérisé en ce que** l'organe de liaison (1-3) comprend des première et deuxième pièces (1, 2) et des moyens (3) élastiques de sollicitation de ces pièces, **en ce que** les première et deuxième pièces (1, 2) portent respectivement les premier et deuxième crochets (41, 42) et des première et deuxième oreilles de préhension (43, 44), **en ce que** ces première et deuxième pièces (1, 2) sont montées coulissantes l'une par rapport à l'autre, et **en ce que** les première et deuxième pièces (1, 2) présentent une zone de croisement mutuel (CM) disposée entre leurs oreilles (43, 44) et leurs crochets respectifs (41, 42), ce dont il résulte que les premier et deuxième crochets (41, 42) peuvent être écartés l'un de l'autre par rapprochement des première et deuxième oreilles (43, 44) de préhension.

2. Assemblage mécanique suivant la revendication 1, **caractérisé en ce que** les moyens élastiques de sollicitation (3) comprennent un ressort hélicoïdal (3) travaillant en compression et propre à écarter les première et deuxième oreilles de préhension (43, 44) l'une de l'autre.

3. Assemblage mécanique suivant la revendication 2, **caractérisé en ce que** les première et deuxième pièces (1, 2) présentent, du côté opposé aux crochets (41, 42) par rapport à la zone de croisement (CM), des premier et deuxième logements respectifs (410, 420) disposés en vis-à-vis, débouchant l'un vers l'autre, et dans lesquels sont respectivement insérées à force des première et deuxième extrémités (31, 32) du ressort (3), ce ressort (3) assurant ainsi la cohésion de l'organe de liaison (1-3).

4. Assemblage mécanique suivant l'une quelconque des revendications précédentes, **caractérisé en ce que** chaque crochet (41, 42) présente, dans un plan perpendiculaire au deuxième axe (X), une transition entre une zone de plus petite largeur (4A) et une zone de plus grande largeur (4B) de ce crochet (41, 42), respectivement plus et moins éloignées de l'extrémité libre (40) de ce crochet (41, 42) suivant le premier axe (Z).

5. Assemblage mécanique suivant l'une quelconque des revendications précédentes, **caractérisé en ce que** chaque crochet (41, 42) présente, dans un plan contenant les premier et deuxième axes (Z, X), un bord incliné (45) prenant naissance à distance de l'extrémité libre (40) de ce crochet (41, 42) et se rapprochant de l'autre crochet (42, 41) à distance croissante de l'extrémité liée (49) de ce crochet (41, 42).

6. Assemblage mécanique suivant l'une quelconque des revendications précédentes, **caractérisé en ce qu'**il comprend en outre des premier et deuxième éléments (5, 6) mutuellement superposés dans une zone de superposition (SP), **en ce que** ces deux éléments (5, 6) sont, au moins dans la zone de superposition (SP), conformés en plaques et percés de paires respectives (51, 52; 61, 62) d'orifices correspondants (51, 61; 52, 62), **en ce que** les orifices correspondants (51, 61; 52, 62) appartenant aux premier et deuxième éléments (5, 6) se recouvrent au moins partiellement, et **en ce que** les premier et deuxième crochets (41, 42) de l'organe de liaison (1-3) sont engagés dans les paires respectives (51, 52; 61, 62) d'orifices correspondants (51, 61; 52, 62) des premier et deuxième éléments (5, 6) superposés, le deuxième élément (6) étant disposé entre le premier élément (5) et l'extrémité libre (40) de chaque crochet (41, 42).

7. Assemblage mécanique suivant la revendication 6, **caractérisé en ce qu'**il comprend en outre un organe d'indexation (7) inséré dans des lumières respectives (50, 60) superposées des premier et deuxième éléments (5, 6), et coopérant avec ces lumières (50, 60) pour assurer un maintien de la position relative des éléments superposés (5, 6) suivant le deuxième axe (X) au moins.

8. Assemblage mécanique suivant la revendication 7, **caractérisé en ce que** l'organe d'indexation (7) prend la forme d'une plaquette (7) qui, au moins en présence de l'organe de liaison (1-3) dans les deux éléments superposés (5, 6), est bloquée à l'intérieur desdites lumières (50, 60).

9. Assemblage mécanique suivant l'une quelconque des revendications 7 et 8, **caractérisé en ce que** ledit organe d'indexation (7) est indépendant de l'organe de liaison (1-3).

10. Assemblage mécanique suivant l'une quelconque des revendications 6 à 9 combinée à la revendication 4, **caractérisé en ce que** chaque orifice (51, 52) de chaque paire d'orifices (51, 52) du premier élément (5) présente au moins une zone de plus petite largeur (5A) et une zone de plus grande largeur (5B) respectivement plus et moins éloignées de l'autre orifice (52, 51) de cette paire (51, 52), les zones (5A, 5B) de plus petite et de plus grande largeurs de chaque orifice (51, 52) étant dimensionnées pour être respectivement traversées par les zones (4A, 4B) de plus petite et de plus grande largeurs de l'un des crochets (41, 42), et la zone (5A) de plus petite largeur de chaque orifice (51, 52) étant moins large que la zone (4B) de plus grande largeur de chaque crochet (41, 42), ce dont il résulte que l'organe de liaison (1-3) reste lié au premier élément (5) en position d'écartement extrême des crochets (41, 42).

11. Assemblage mécanique suivant la revendication 10, **caractérisé en ce que** chaque orifice (51, 52) de chaque paire d'orifices (51, 52) du premier élément (5) présente au moins une deuxième zone (5C) de plus petite largeur, la zone (5B) de plus grande largeur et la deuxième zone (5C) de plus petite largeur de chaque orifice (51, 52) étant respectivement plus et moins éloignées de l'autre orifice (52, 51) de cette paire (51, 52), ce dont il résulte que les crochets (41, 42) de la pièce de liaison (1-3) ne peuvent être insérés dans les orifices (51, 52) d'une paire d'orifices (51, 52) du premier élément (5) que dans une position relative intermédiaire entre leur position de rapprochement extrême et leur position d'écartement extrême.

12. Assemblage mécanique suivant l'une quelconque des revendications 6 à 11 combinée à la revendication 4, **caractérisé en ce que** chaque orifice (61, 62) de chaque paire d'orifices (61, 62) du deuxième élément (6) est rectangulaire et présente, suivant un troisième axe (Y) perpendiculaire aux premier et deuxième axes (Z, X), une largeur (6A) supérieure à celle de la zone (4B) de plus grande largeur d'un crochet (41, 42).

## Patentansprüche

1. Mechanische Anordnung, umfassend mindestens ein Verbindungsglied (1-3), das einen ersten und einen zweiten Haken (41, 42) umfasst, die jeweils ein verbundenes Ende (49) und ein freies Ende (40) aufweisen, die in einer parallel zu einer ersten Achse (Z) verlaufenden Richtung voneinander beabstandet sind, wobei dieser erste und zweite Haken (41, 42) gemäß einer senkrecht zu der ersten Achse (Z) verlaufenden zweiten Ausrichtungsachse (X) einander gegenüber angeordnet, elastisch zueinander beaufschlagt und zwischen einer relativen Position der äußersten Annäherung und einer relativen Position der äußersten Entfernung beweglich sind, **dadurch gekennzeichnet, dass** das Verbindungsglied (1-3) ein erstes und ein zweites Teil (1, 2) und Mittel (3) zur elastischen Beaufschlagung dieser Teile umfasst, dass das erste und das zweite Teil (1, 2) jeweils den ersten und den zweiten Haken (41, 42) und eine erste und eine zweite Greiflasche (43, 44) tragen, dass dieses erste und zweite Teil (1, 2) bezüglich einander gleitend montiert sind und dass das erste und das zweite Teil (1, 2) einen Bereich der gegenseitigen Überschneidung (CM) aufweisen, der zwischen ihren Laschen (43, 44) und ihren jeweiligen Haken (41, 42) angeordnet ist, woraus sich ergibt, dass der erste und der zweite Haken (41, 42) voneinander beabstandet werden können, indem die erste und die zweite Greiflasche (43, 44) aneinander angenähert werden.

2. Mechanische Anordnung nach Anspruch 1, **dadurch gekennzeichnet, dass** die elastischen Beaufschlagungsmittel (3) eine Schraubenfeder (3) umfassen, die mit Druck arbeitet und geeignet ist, die erste und die zweite Greiflasche (43, 44) voneinander zu beabstanden.

3. Mechanische Anordnung nach Anspruch 2, **dadurch gekennzeichnet, dass** das erste und das zweite Teil (1, 2) an der den Haken (41, 42) bezüglich des Überschneidungsbereichs (CM) gegenüberliegenden Seite jeweils eine erste und eine zweite Aufnahme (410, 420) aufweisen, die einander gegenüber angeordnet sind, zueinander münden und in die jeweils ein erstes und ein zweites Ende (31, 32) der Feder (3) unter Kraftaufwand eingeführt sind, wobei diese Feder (3) somit den Zusammenhalt des Verbindungsglieds (1-3) gewährleistet.

4. Mechanische Anordnung nach einem der vorhergehenden Ansprüche, **dadurch gekennzeichnet, dass** jeder Haken (41, 42) in einer senkrecht zur zweiten Achse (X) verlaufenden Ebene einen Übergang zwischen einem Bereich (4A) mit kleinerer Breite und einem Bereich (4B) mit größerer Breite dieses Hakens (41, 42) aufweist, die gemäß der ersten Achse (Z) jeweils mehr oder weniger vom freien Ende (40) dieses Hakens (41, 42) entfernt sind.

5. Mechanische Anordnung nach einem der vorhergehenden Ansprüche, **dadurch gekennzeichnet, dass** jeder Haken (41, 42) in einer die erste und die zweite Achse (Z, X) enthaltenden Ebene einen geneigten Rand (45) aufweist, der entfernt vom freien Ende (40) dieses Hakens (41, 42) beginnt und sich mit zunehmendem Abstand vom verbundenen Ende (49) dieses Hakens (41, 42) dem anderen Haken (42, 41) nähert.

6. Mechanische Anordnung nach einem der vorhergehenden Ansprüche, **dadurch gekennzeichnet, dass** sie ferner ein erstes und ein zweites Element (5, 6) umfasst, die sich in einem Überlagerungsbereich (SP) gegenseitig überlagern, dass diese beiden Elemente (5, 6) mindestens im Überlagerungsbereich (SP) plattenförmig und mit jeweiligen Paaren (51, 52; 61, 62) entsprechender Öffnungen (51, 61; 52, 62) durchbohrt sind, dass die zum ersten und zum zweiten Element (5, 6) gehörenden entsprechenden Öffnungen (51, 61; 52, 62) sich mindestens teilweise überdecken und dass der erste und der zweite Haken (41, 42) des Verbindungsglieds (1-3) in den jeweiligen Paaren (51, 52; 61, 62) entsprechender Öffnungen (51, 61; 52, 62) des ersten und des zweiten Elements (5, 6), die sich überlagern, in Eingriff stehen, wobei das zweite Element (6) zwischen dem ersten Element (5) und dem freien Ende (40) jedes Hakens (41, 42) angeordnet ist.

7. Mechanische Anordnung nach Anspruch 6, **dadurch gekennzeichnet, dass** sie ferner ein Indexierungsglied (7) umfasst, das in jeweiligen sich überlagernden Langlöcher (50, 60) des ersten und des zweiten Elements (5, 6) eingeführt ist und mit diesen Langlöchern (50, 60) zusammenwirkt, um sicherzustellen, dass die Relativposition der sich überlagernden Elemente (5, 6) mindestens gemäß der zweiten Achse (X) aufrechterhalten bleibt.

8. Mechanische Anordnung nach Anspruch 7, **dadurch gekennzeichnet, dass** das Indexierungsglied (7) die Form eines Plättchens (7) hat, das mindestens bei Anwesenheit des Verbindungsglieds (1-3) in den beiden sich überlagernden Elementen (5, 6) im Innern der Langlöcher (50, 60) blockiert ist.

9. Mechanische Anordnung nach einem der Ansprüche 7 und 8, **dadurch gekennzeichnet, dass** das Indexierungsglied (7) vom Verbindungsglied (1-3) unabhängig ist.

10. Mechanische Anordnung nach einem der Ansprüche 6 bis 9, kombiniert mit Anspruch 4, **dadurch gekennzeichnet, dass** jede Öffnung (51, 52) jedes Paars Öffnungen (51, 52) des ersten Elements (5) mindestens einen Bereich (5A) mit kleinerer Breite und einen Bereich (5B) mit größerer Breite aufweist, die jeweils mehr oder weniger von der anderen Öffnung (52, 51) dieses Paars (51, 52) entfernt sind, wobei die Bereiche (5A, 5B) mit kleinerer und größerer Breite jeder Öffnung (51, 52) so bemessen sind, dass jeweils die Bereiche (4A, 4B) mit kleinerer und größerer Breite einer der Haken (41, 42) durch sie hindurchgehen, und der Bereich (5A) mit kleinerer Breite jeder Öffnung (51, 52) weniger breit als der Bereich (4B) mit größerer Breite jedes Hakens (41, 42) ist, woraus sich ergibt, dass das Verbindungsglied (1-3) in der äußersten Entfernungsposition der Haken (41, 42) mit dem ersten Element (5) verbunden bleibt.

11. Mechanische Anordnung nach Anspruch 10, **dadurch gekennzeichnet, dass** jede Öffnung (51, 52) jedes Paars Öffnungen (51, 52) des ersten Elements (5) mindestens einen zweiten Bereich (5C) mit kleinerer Breite aufweist, wobei der Bereich (5B) mit größerer Breite und der zweite Bereich (5C) mit kleinerer Breite jeder Öffnung (51, 52) jeweils mehr oder weniger von der anderen Öffnung (52, 51) dieses Paars (51, 52) entfernt sind, woraus sich ergibt, dass die Haken (41, 42) des Verbindungsteils (1-3) nur in einer relativen Zwischenposition zwischen ihrer Position der äußersten Annäherung und ihrer Position der äußersten Entfernung in die Öffnungen (51, 52) eines Paars Öffnungen (51, 52) des ersten Elements (5) eingeführt werden können.

12. Mechanische Anordnung nach einem der Ansprüche 6 bis 11, kombiniert mit Anspruch 4, **dadurch gekennzeichnet, dass** jede Öffnung (61, 62) des Paars Öffnungen (61, 62) des zweiten Elements (6) rechteckig ist und gemäß einer senkrecht zu der ersten und der zweiten Achse (Z, X) verlaufenden dritten Achse (Y) eine Breite (6A) hat, die größer als die des Bereichs (4B) mit größerer Breite eines Hakens (41, 42) ist.

## Claims

1. Mechanical assembly comprising at least one connecting member (1-3) having first and second hooks (41, 42) that each have a connected end (49) and a free end (40) that are spaced apart from one another in a direction parallel to a first axis (Z), these first and second hooks (41, 42) being disposed opposite one another along a second alignment axis (X) perpendicular to the first axis (Z), being urged elastically towards one another, and being able to move between a close-together relative end position and a spaced-apart relative end position, **characterized in that** the connecting member (1-3) comprises first and second components (1, 2) and elastic means (3) for urging these components, **in that** the first and second components (1, 2) respectively carry the first and second hooks (41, 42) and first and second gripping lugs (43, 44), **in that** these first and second components (1, 2) are mounted so as to slide with respect to one another, and **in that** the first and second components (1, 2) have a mutual crossover zone (CM) disposed between their respective hooks (41, 42) and lugs (43, 44), with the result that the first and second hooks (41, 42) can be spaced apart from one another by moving the first and second gripping lugs (43, 44) together.

2. Mechanical assembly according to Claim 1, **characterized in that** the elastic urging means (3) comprise a helical spring (3) that acts in compression and is able to space the first and second gripping lugs (43, 44) apart from one another.

3. Mechanical assembly according to Claim 2, **characterized in that** the first and second components (1, 2) have, on the side away from the hooks (41, 42) with respect to the crossover zone (CM), first and second respective housings (410, 420) which are disposed facing one another, open towards one another, and in which first and second ends (31, 32) of the spring (3) are respectively force-fitted, this spring (3) thereby ensuring the cohesion of the connecting member (1-3).

4. Mechanical assembly according to any one of the preceding claims, **characterized in that** each hook (41, 42) has, in a plane perpendicular to the second axis (X), a transition between a zone of smaller width (4A) and a zone of greater width (4B) of this hook (41, 42), these being respectively further away from and closer to the free end (40) of this hook (41, 42) along the first axis (Z).

5. Mechanical assembly according to any one of the preceding claims, **characterized in that** each hook (41, 42) has, in a plane containing the first and second axes (Z, X), an inclined edge (45) that starts at a distance from the free end (40) of this hook (41, 42) and extends towards the other hook (42, 41) at an increasing distance from the connected end (49) of this hook (41, 42).

6. Mechanical assembly according to any one of the preceding claims, **characterized in that** it also comprises first and second elements (5, 6) that are mutually superposed in a superposition zone (SP), **in that** these two elements (5, 6), at least in the superposition zone (SP), are in the form of plates and are pierced with respective pairs (51, 52; 61, 62) of corresponding orifices (51, 61; 52, 62), **in that** the corresponding orifices (51, 61; 52, 62) belonging to the first and second elements (5, 6) overlap at least partially, and **in that** the first and second hooks (41, 42) of the connecting member (1-3) are engaged in the respective pairs (51, 52; 61, 62) of corresponding orifices (51, 61; 52, 62) of the first and second superposed elements (5, 6), the second element (6) being disposed between the first element (5) and the free end (40) of each hook (41, 42).

7. Mechanical assembly according to Claim 6, **characterized in that** it also comprises an indexing member (7) that is inserted into respective superposed holes (50, 60) in the first and second elements (5, 6), and that engages with the holes (50, 60) in order to maintain the relative position of the superposed elements (5, 6) at least along the second axis (X).

8. Mechanical assembly according to Claim 7, **characterized in that** the indexing member (7) is in the form of a tab (7) which, at least when the connecting member (1-3) is present in the two superposed elements (5, 6), is blocked inside said holes (50, 60).

9. Mechanical assembly according to either one of Claims 7 and 8, **characterized in that** said indexing member (7) is independent of the connecting member (1-3) .

10. Mechanical assembly according to any one of Claims 6 to 9 in combination with Claim 4, **characterized in that** each orifice (51, 52) of each pair of orifices (51, 52) in the first element (5) has at least one zone of smaller width (5A) and one zone of greater width (5B) that are respectively further away from and closer to the other orifice (52, 51) of this pair (51, 52), the zone of smaller width (5A) and the zone of greater width (5B) of each orifice (51, 52) being dimensioned so as to be passed through respectively by the zone of smaller width (4A) and the zone of greater width (4B) of one of the hooks (41, 42), and the zone of smaller width (5A) of each orifice (51, 52) being less wide than the zone of greater width (4B) of each hook (41, 42), with the result that the connecting member (1-3) remains connected to the first element (5) in the spaced-apart end position of the hooks (41, 42).

11. Mechanical assembly according to Claim 10, **characterized in that** each orifice (51, 52) of each pair of orifices (51, 52) of the first element (5) has at least one second zone of smaller width (5C), the zone of greater width (5B) and the second zone of smaller width (5C) of each orifice (51, 52) being respectively further away from and closer to the other orifice (52, 51) of this pair (51, 52), with the result that the hooks (41, 42) of the connecting component (1-3) can be inserted into the orifices (51, 52) of a pair of orifices (51, 52) in the first element (5) only in an intermediate relative position between their close-together end position and their spaced-apart end position.

12. Mechanical assembly according to any one of Claims 6 to 11 in combination with Claim 4, **characterized in that** each orifice (61, 62) of each pair of orifices (61, 62) in the second element (6) is rectangular and has, along a third axis (Y) perpendicular to the first and second axes (Z, X), a width (6A) that is greater than that of the zone of greater width (4B) of a hook (41, 42).
